# EUROPÄISCHE PATENTANMELDUNG

(11) **EP 0 825 299 A2**
(43) Veröffentlichungstag der Anmeldung: **25.02.1998**
(21) Anmeldenummer: 97113296.4
(22) Anmeldetag: 01.08.1997
(51) Int. Cl.: D21J 1/20, D21H 17/07, D21H 13/36

(54) **Verfahren zur Herstellung von Dämmstoffplatten auf Mineral- und Papierfaserbasis**

(30) Priorität: 09.08.1996 DE 19632152
(71) Anmelder: Th. Goldschmidt AG, 45127 Essen (DE)
(72) Erfinder:

(57) **Zusammenfassung**

Die Erfindung betrifft ein Verfahren zur Herstellung von Dämmstoffplatten auf Mineral- und Papierfaserbasis durch Aufschlämmen von Mineralfasern, Bindemitteln und üblichen Zusatzstoffen in Wasser, Formen der Dämmstoffplatte durch Aufbringen des Slurrys auf ein Sieb, Trocknen und Verfestigen der Dämmstoffplatte.

Durch den Einsatz von tensidischen Verbindungen wird eine schnellere und bessere Entwässerung der für den Trocknungsprozeß vorgesehenen Filterrückstände erreicht.

## Beschreibung

Die Erfindung betrifft ein Verfahren zur Herstellung von Dämmstoffplatten auf Mineral- und Papierfaserbasis durch Aufschlämmen von Mineralfasern, Bindemitteln und üblichen Zusatzstoffen in Wasser, Formen der Dämmstoffplatte durch Aufbringen des Slurrys auf ein Sieb, Trocknen und Verfestigen der Dämmstoffplatte.

Solche Platten werden, mit dekorativen Oberflächen versehen, in abgehängten Decken oder Wandpaneelen vorwiegend zur akustischen Isolation von Räumen eingesetzt. Sie finden jedoch auch Verwendung im baulichen Brandschutz, besonders als Türfüllungen und Verkleidungen von Trägern und Stützen bei Stahlkonstruktionen sowie von Lüftungs- und E-Leitungskanälen.

Die genannten Platten werden in einem sogenannten Naßverfahren hergestellt. Dabei wird eine stark wäßrige Aufschlämmung von Mineralwolle, Papierfasern, Stärke und Ton bereitgestellt, welcher auf einem Sieb durch Abnutschen ein Teil des Wassers entzogen wird. Der so entstandene Siebkuchen wird dann in einen Ofen geführt, in welchem das Restwasser bei erhöhter Temperatur verdampft. Gleichzeitig erhärtet das Stärkegel durch Trocknung und stellt dabei eine feste Verbindung zwischen den sich kreuzenden Mineral- und Papierfasern her.

Um ein schnelleres Entwässern auf dem Maschinensieb zu erreichen, werden der wäßrigen Aufschlämmung nichtionische Tenside zugesetzt (auch um durch den entstehenden Schaum das Raumgewicht zu reduzieren). Dieser Tensidzusatz hat jedoch den Nachteil, daß nach dem Trocknen eine stark hydrophile Komponente in den Platten verbleibt. Diese Nachteile zeigen sich im einzelnen wie folgt:

Nach dem Schliff der getrockneten Rohplatten werden diese mit wäßrigen Dispersionsfarben beschichtet. Da der Untergrund stark porös ist und deshalb viel Farbe in den Untergrund wandert, wird bei diesem Vorgang unnötig Farbe verbraucht.

Weiter neigen die bisher eingesetzten Tenside dazu, Luftfeuchtigkeit zu adsorbieren. Dadurch kann es zum Erweichen des verwendeten Bindemittels kommen. Die Bindekraft wird dadurch vermindert, und aufgrund des Eigengewichts kann es dann zum Durchbiegen der im Rahmen befestigten Platten kommen.

Aufgabe der Erfindung ist es zu erreichen, daß dem zu trocknenden Gemisch vor dem Trocknungsprozeß möglichst viel Wasser entzogen wird und kein hydrophiles Tensid in der Platte verbleibt.

Erfindungsgemäß wird das durch den Einsatz der im folgenden aufgeführten tensidischen Verbindungen erreicht.

Vorzugsweise werden dabei als tensidische Verbindungen Betaine verwendet, die die allgemeine Formel 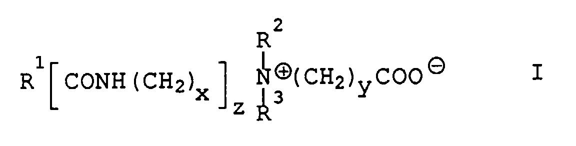 aufweisen, worin
- R¹: einen Alkylrest einer Fettsäure mit 6 bis 21 Kohlenstoffatomen und
- R², R³: unabhängig voneinander Alkylreste mit 1 bis 4 Kohlenstoffatomen bedeuten,
- x: 2 oder 3,
- y: 1, 2 oder 3und
- z: 0 oder 1 ist.

Besonders bevorzugt wird ein Betain zugesetzt, in dem
- R¹: der Alkylrest eines aus gehärtetem Kokosfett erhaltenen Fettsäuregemisches,
- R², R³: ein Methylrest,
- x: = 3,
- y: = 2 und
- z: = 1 ist.

Ein weiteres Merkmal der Erfindung ist der Einsatz von Aminoxiden der allgemeinen Formel 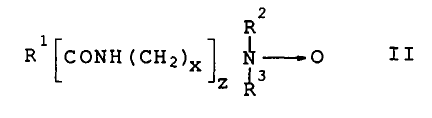 worin
- R¹: einen Alkylrest einer Fettsäure mit 6 bis 18 Kohlenstoffatomen und
- R², R³: unabhängig voneinander Alkylreste mit 1 bis 4 Kohlenstoffatomen bedeuten,
- x: 2 oder 3 und
- z: 0 oder 1 ist.

Zweckmäßigerweise setzt man ein Aminoxid zu, in dem
- R¹: der Alkylrest eines aus gehärtetem Kokosfett erhaltenen Fettsäuregemisches,
- R², R³: ein Methylrest und
- x: = 3 und
- z: = 1 ist.

Weiterhin werden quaternäre Ammoniumverbindungen zugesetzt, die der folgenden allgemeinen Formel entsprechen 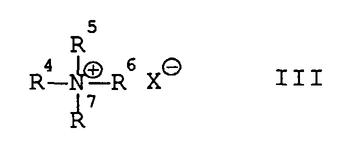 worin
- R⁴: einen Alkyl- oder Alkenylrest mit 8 bis 22 Kohlenstoffatomen,
- R⁵: einen Alkyl- oder Hydroxyalkylrest mit 1 bis 5 Kohlenstoffatomen,
- R⁶: R⁴ oder R⁵,
- R⁷: R⁵ oder gegebenenfalls einen substituierten Benzylrest und
- X: ein Anion bedeuten.

Ein besonders bevorzugter Vertreter dieser Gruppe ist das Stearyltrimethylammoniumchlorid, -bromid oder -methosulfat; weitere einsetzbare Verbindungen sind beispielsweise Stearyldimethylhydroxypropylammoniumhalogenide, Cetyltrimethylammoniumchlorid, -bromid oder -methosulfat, Lauryltrimethylammoniumchlorid und -bromid und Lauryldimethylammoniumhydroxypropyl- bzw. -hydroxyethylsalze oder auch Cocoyltrimethylammoniumhalogenide.

Von besonderer Wirksamkeit sind Esterquats der Formel 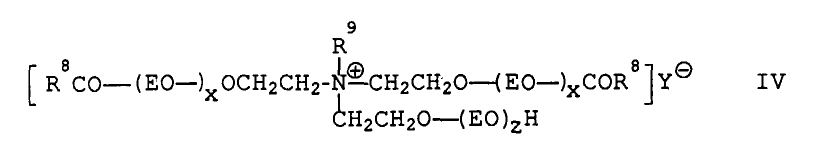 worin
- R⁸CO: ein aliphatischer, gegebenenfalls hydroxysubstituierter Acylrest mit 12 bis 22 Kohlenstoffatomen und 0 oder 1 Doppelbindung ist,
- R⁹: eine Methylgruppe oder eine Polyethylenglycoletherkette mit 1 bis 5 Ethylenoxideinheiten bedeutet,
- x, z: für 0 oder in Summe für Zahlen von 1 bis 20 und
- Y: für Halogen, Alkylsulfat oder Alkylphosphat steht.

Besonders bevorzugt ist ein Esterquat der Formel 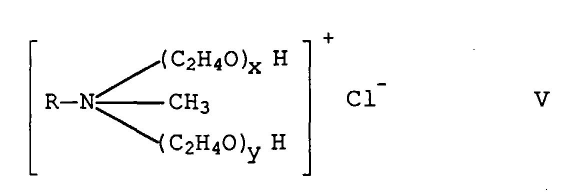 worin
- R: der Alkylrest eines aus gehärtetem Kokosfett erhaltenen Fettsäuregemisches und
- x+y: 15 ist.

Die Herstellung der obengenannten tensidischen Verbindungen ist einem breiten Spektrum der Patentliteratur zu entnehmen, das hier im einzelnen nicht aufgeführt werden muß.

Durch den Einsatz der tensidischen Verbindungen hat sich gezeigt, daß diese zu einer außerordentlich schnellen Entwässerung führen und somit die für den Trocknungsprozeß vorgesehenen Filterrückstände deutlich weniger Wasser enthalten. Man spart dadurch an Energie und erreicht höhere Produktionsgeschwindigkeiten. Die getrockneten Platten zeigen auf ihrer Oberfläche deutlich hydrophobe Eigenschaften.

Es hat sich als zweckmäßig erwiesen, der Mineral- und Papierfaseraufschlämmung Siliconharze als Hydrophobierungsmittel zuzusetzen. Durch die Verwendung dieser bekannten Siliconharze in Verbindung mit den erfindungsgemäß eingesetzten tensidischen Verbindungen wird eine noch gleichmäßigere und bessere Hydrophobierung erzielt.

Anhand der folgenden Beispiele wird das erfindungsgemäße Verfahren noch näher erläutert.

Zunächst wird eine Mischung hergestellt, bei der auf den Zusatz eines Tensids verzichtet wird.

In 3 l Wasser werden 120 g Steinwolle, 10 g Stärke, 30 g Ton und 0,4 Gew.-% einer 50 %igen Hydrophobieremulsion, bezogen auf die o.a. Festkörper, auf Basis eines Methylsiliconharzes zugesetzt und gut miteinander vermischt.

### Beispiel 1 (nicht erfindungsgemäß)

Zu der oben beschriebenen Standardmischung werden 0,1 Gew.-% eines Tensids des Standes der Technik, nämlich eines Nonylphenylethoxylats mit 6 Ethylenoxidgruppen gegeben.

### Beispiel 2 (erfindungsgemäß)

Der Standardmischung werden 0,1 Gew.-% eines Betains der Formel 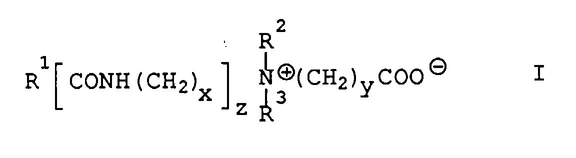 zugesetzt, worin
- R¹: der Alkylrest eines aus gehärtetem Kokosfett erhaltenen Fettsäuregemisches,
- R², R³: ein Methylrest,
- x: = 3,
- y: = 2 und
- z: = 1 ist.

### Beispiel 3 (erfindungsgemäß)

Der Standardmischung werden 0,1 Gew.-% eines Aminoxids der Formel 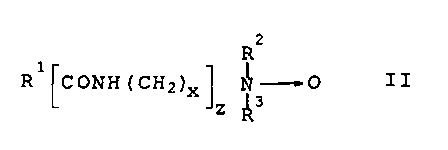 zugesetzt, worin
- R¹: der Alkylrest eines aus gehärtetem Kokosfett erhaltenen Fettsäuregemisches,
- R², R³: ein Methylrest und
- x: = 3 und
- z: = 1 ist.

### Beispiel 4 (erfindungsgemäß)

Der Standardmischung werden 0,1 Gew.-% eines Stearyltrimethylammoniumchlorids zugesetzt.

### Beispiel 5 (erfindungsgemäß)

Der Standardmischung werden 0,1 Gew.-% Esterquats der Formel 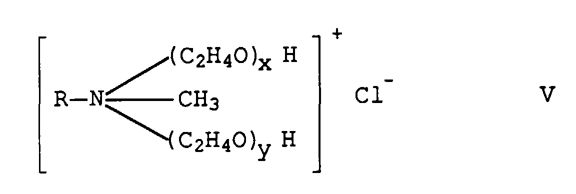 zugesetzt, worin
- R: der Alkylrest eines aus gehärtetem Kokosfett erhaltenen Fettsäuregemisches und
- x+y: 15 ist.

Die eingesetzten Tensidkonzentrationen beziehen sich auf den in der Standardmischung befindlichen Feststoffanteil.

Diese Aufschlämmung wird nacheinander in eine auf einer Saugflasche befindlichen mit Schwarzbandfilter versehenen Nutsche gegeben und im Wasserstrahlvakuum von 50 mbar abgesaugt.

| | |
|---|---|
| Für den Absaugvorgang benötigt man bei der Standardmischung | 27 Minuten |
| bei der Mischung mit dem Tensid des Standes der Technik (Beispiel 1) | 22 Minuten |
| bei der Mischung mit den erfindungsgemäß zugesetzten tensidischen Verbindungen (Beispiele 2, 3, 4, 5) | 11, 11,5, 10 bzw. 10,5 Minuten. |

Entsprechend enthalten die auf dem Filter befindlichen Rückstände noch folgende Wasseranteile:

| | |
|---|---|
| Standardmischung | 61 % |
| Beispiel 1 | 56 % |
| Beispiel 2 | 46 % |
| Beispiel 3 | 45 % |
| Beispiel 4 | 44 % |
| Beispiel 5 | 45 % |

### Beispiel 6

In diesem Beispiel werden anhand der Wasseraufnahmewerte die erheblich verbesserten hydrophoben Eigenschaften einer Mineralfaserdeckenplatte gezeigt, die mit den erfindungsgemäß eingesetzten Tensiden behandelt wurde.

Die plattenförmigen Filterrückstände gemäß Beispiel 1 bis 5 werden jeweils 1 ¾ Std. bei 170 °C getrocknet, nach dem Erkalten gewogen und anschließend über einen Zeitraum von 2 Std. in einem Wasserbad 5 cm tief unter Wasser getaucht. Danach werden die oben aufgeführten Proben entnommen, das stehende Wasser mit Filterpapier abgetupft und zurückgewogen. Es werden folgende Wasseraufnahmewerte erhalten:

| | |
|---|---|
| Beispiel 1 | 18 % |
| Beispiel 2 | 7 % |
| Beispiel 3 | 9 % |
| Beispiel 4 | 7 % |
| Beispiel 5 | 8 % |

Die Wasseraufnahmewerte zeigen deutlich, daß sich durch die Verwendung der erfindungsgemäßen Tenside Platten mit hydrophoben Eigenschaften herstellen lassen.

Neben einer erheblich schnelleren Entwässerung gegenüber der Standardmischung und der Probe mit Alkylarylsulfonat (Nonylphenolethoxylate mit 6 Ethylenoxidgruppen) enthalten die Filterrückstände, bei denen mit den erfindungsgemäßen tensidischen Verbindungen gearbeitet wird, deutlich weniger Wasser. Das bedeutet, daß neben geringeren Energiekosten auch höhere Produktionsgeschwindigkeiten bei der Herstellung von Mineral- und Papierfaserplatten erzielt werden können.

## Patentansprüche

1. Verfahren zur Herstellung von Dämmstoffplatten auf Mineral- und Papierfaserbasis durch Aufschlämmen von Mineralfasern, Bindemitteln und üblichen Zusatzstoffen in Wasser, Formen der Dämmstoffplatte durch Aufbringen des Slurrys auf ein Sieb, Trocknen und Verfestigen der Dämmstoffplatte, dadurch gekennzeichnet, daß man der Aufschlämmung Betaine der allgemeinen Formel 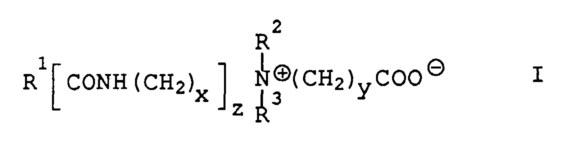 worin
R¹ einen Alkylrest einer Fettsäure mit 6 bis 18 Kohlenstoffatomen und
R², R³ unabhängig voneinander Alkylreste mit 1 bis 4 Kohlenstoffatomen bedeuten,
x 2 oder 3,
y 1, 2 oder 3 und
z 0 oder 1 ist,
oder Aminoxide der allgemeinen Formel 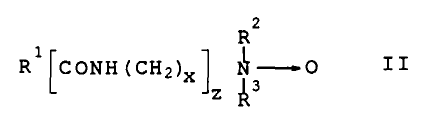 worin
R¹ einen Alkylrest einer Fettsäure mit 6 bis 18 Kohlenstoffatomen und
R², R³ unabhängig voneinander Alkylreste mit 1 bis 4 Kohlenstoffatomen bedeuten,
x 2 oder 3 und
z 0 oder 1 ist,
oder quaternäre Ammoniumverbindungen der allgemeinen Formel 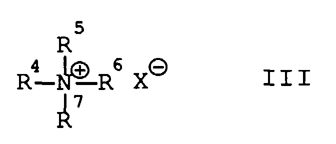 worin
R⁴ einen Alkyl- oder Alkenylrest mit 8 bis 22 Kohlenstoffatomen,
R⁵ einen Alkyl- oder Hydroxyalkylrest mit 1 bis 5 Kohlenstoffatomen,
R⁶ R⁴ oder R⁵,
R⁷ R⁵ oder gegebenenfalls einen substituierten Benzylrest und
X ein Anion bedeuten,
oder Esterquats der Formel 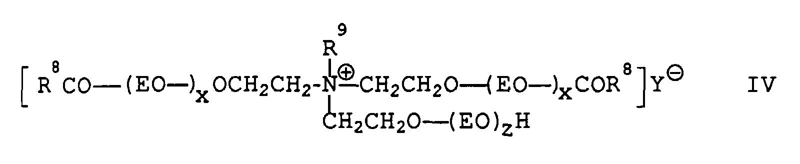 worin
R⁸CO ein aliphatischer, gegebenenfalls hydroxysubstituierter Acylrest mit 12 bis 22 Kohlenstoffatomen und 0 oder 1 Doppelbindung ist,
R⁹ eine Methylgruppe oder eine Polyethylenglycoletherkette mit 1 bis 5 Ethylenoxideinheiten bedeutet,
x, z für 0 oder in Summe für Zahlen von 1 bis 20 und
Y für Halogen, Alkylsulfat oder Alkylphosphat steht,
in Mengen von 0,01 bis 3 Gew.-%, bezogen auf Festkörper, zusetzt.

2. Verfahren nach Anspruch 1, dadurch gekennzeichnet, daß man ein Betain zusetzt, in dem
R¹ der Alkylrest eines aus gehärtetem Kokosfett erhaltenen Fettsäuregemisches,
R², R³ ein Methylrest,
x = 3,
y = 2 und
z = 1 ist.

3. Verfahren nach Anspruch 1, dadurch gekennzeichnet, daß man ein Aminoxid zusetzt, in dem
R¹ der Alkylrest eines aus gehärtetem Kokosfett erhaltenen Fettsäuregemisches,
R², R³ ein Methylrest und
x = 3 und
z = 1 ist.

4. Verfahren nach Anspruch 1, dadurch gekennzeichnet, daß man als quaternäre Ammoniumverbindung Stearyltrimethylammoniumchlorid verwendet.

5. Verfahren nach Anspruch 1, dadurch gekennzeichnet, daß man ein Esterquat der Formel 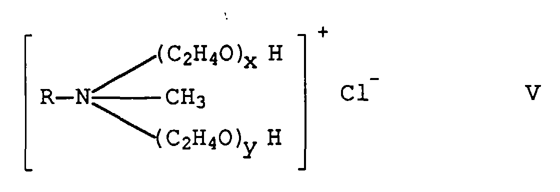 verwendet, worin
R der Alkylrest eines aus gehärtetem Kokosfett erhaltenen Fettsäuregemisches und
x+y 15 ist.

6. Verfahren nach Anspruch 1, dadurch gekennzeichnet, daß man dem Slurry ein hydrophobierendes Siliconharz zusetzt.
